# EUROPÄISCHE PATENTSCHRIFT

(11) **EP 0 922 287 B1**
(45) Veröffentlichungstag und Bekanntmachung des Hinweises auf die Patenterteilung: **20.08.2003**
(21) Anmeldenummer: 98925444.6
(22) Anmeldetag: 24.04.1998
(51) Int. Cl.: H01F 7/16, F16K 31/06

(54) **VERFAHREN ZUR HERSTELLUNG EINER MAGNETSPULE FÜR EIN VENTIL UND VENTIL MIT EINER MAGNETSPULE**
METHOD FOR PRODUCING A MAGNETIC COIL FOR A VALVE AND VALVE WITH A MAGNETIC COIL
PROCEDE DE PRODUCTION D'UNE BOBINE MAGNETIQUE DESTINEE A UNE SOUPAPE, ET SOUPAPE POURVUE D'UNE BOBINE MAGNETIQUE

(30) Priorität: 27.06.1997 DE 19727414
(43) Veröffentlichungstag der Anmeldung: 16.06.1999
(73) Patentinhaber: ROBERT BOSCH GMBH, 70442 Stuttgart (DE)
(72) Erfinder: NOLLER, Klaus, D-71570 Oppenweiler (DE); MAIER, Dieter, D-70839 Gerlingen (DE)
(86) Internationale Anmeldenummer: DE9801142
(87) Internationale Veröffentlichungsnummer: WO99000804

(56) Entgegenhaltungen:
- EP-A- 0 140 290
- FR-A- 2 303 360
- GB-A- 2 212 982
- PATENT ABSTRACTS OF JAPAN vol. 005, no. 109 (E-065), 15. Juli 1981 & JP 56 048122 A (IKEDA DENKI KK), 1. Mai 1981

## Beschreibung

### Stand der Technik

Die Erfindung geht aus von einem Verfahren zur Herstellung einer Magnetspule für ein Ventil nach der Gattung des Anspruchs 1 bzw. von einem Ventil mit einer Magnetspule nach der Gattung des Anspruchs 5.

Aus der FR 2 303 360 A ist bereits ein Elektromagnet bekannt, der als Steuermagnet für Drucknadeln eines Mosaikdruckers verwendbar ist. Dieser Elektromagnet weist zwei Polschuhe auf, wobei die beiden Polschuhe durch ein Distanzstück magnetisch voneinander getrennt sind. Die Polschuhe und das Distanzstück bilden zusammen einen metallenen Grundkörper mit weitgehend konstanten Außendurchmesser, der letztlich jedoch dreiteilig ausgeführt ist, ohne dass die einzelnen Polbauteile miteinander fest verbunden wären. Bei der Montage des Elektromagneten werden die beiden Polschuhe sowie der Distanzring jeweils als Einzelbauteile ohne feste Verbindung zueinander auf einen Dorn aufgezogen und anschließend mit einem thermoplastischen Material umgossen. Erst durch das Umspritzen der drei Einzelbauteile mit diesem Kunststoffkörper werden diese zueinander fixiert. Der Kunststoffkörper wird dabei derart geformt, dass er mit zwei Kragenabschnitten. nach außen ragend auch als Spulenkörper die Wicklung der Magnetspule aufnehmen kann.

Aus der US-PS 4,610,080 ist bereits ein elektromagnetisch betätigbares Ventil bekannt, das einen elektromagnetischen Kreis aufweist, zu dem unter anderem eine Magnetspule gehört, durch deren Erregung ein Ventilglied zum Öffnen bzw. Schließen des Ventils betätigbar ist. Die Magnetspule ist derart ausgebildet, daß ein Spulenkörper aus Kunststoff als Träger- und Schutzelement eine Bewicklung aufnimmt, die mit bekanntem Spulendraht vorgenommen wird. Die vorgefertigte Baugruppe aus Spulenkörper und Bewicklung wird im Ventil so montiert, daß ein als Innenpol dienendes ventilinnenrohr in die innere Öffnung des Spulenkörpers eingreift, so daß die Magnetspule den Innenpol in Umfangsrichtung vollständig umgreift. Der Spulenkörper wird dabei mit Hilfe von Dichtringen auf das Ventilinnenrohr aufgebracht.

Auch aus den Veröffentlichungen EP-PS 0 513 037, GB-OS 2 212 982 und DE-GM 295 14 315 ist es bekannt,

Magnetspulenbaugruppen für elektromagnetisch betätigbare Ventile vorzufertigen, die aus einem Spulenkörper und einer eingebetteten Bewicklung bestehen. In stets ähnlicher Weise werden diese vorgefertigten Baugruppen auf einem inneren Ventilbauteil des Magnetkreises montiert.

### Vorteile der Erfindung

Das erfindungsgemäße Verfahren zur Herstellung einer Magnetspule für ein Ventil mit den kennzeichnenden Merkmalen des Anspruchs 1 hat den Vorteil, daß auf einfache Art und Weise Ventile mit kleineren Abmessungen in kompakter Bauweise herstellbar sind. In vorteilhafter Weise wird durch das direkte Aufbringen eines Wicklungsträgers auf einen inneren Grundkörper (Ventilinnenrohr, Innenpol) des Ventils Einbauraum eingespart, da die radialen Wandungsdicken des Wicklungsträgers sehr dünn ausgebildet werden können. Insgesamt sind so Ventile mit kleineren Außendurchmessern realisierbar. Eine separate Montageeinrichtung für das Anbringen des Spulendrahtes auf einem Spulenkörper zu einer eigenständigen Baugruppe kann entfallen, da die Wicklung in den bereits am Grundkörper vorgesehenen Wicklungsträger eingebracht wird, so daß eine Kostenreduzierung erreicht wird.

Durch die in den Unteransprüchen aufgeführten Maßnahmen sind vorteilhafte Weiterbildungen und Verbesserungen des im Anspruch 1 angegebenen Verfahrens möglich.

In vorteilhafter Weise werden unmittelbar am Grundkörper bzw. am aufgespritzten Wicklungsträger ringförmige Spulenräume geschaffen, die axiale Wickelbegrenzungen aufweisen, die ein axiales Aufweiten oder Verrutschen der Bewicklung verhindern.

Das erfindungsgemäße Ventil mit den kennzeichnenden Merkmalen des Anspruchs 5 hat den Vorteil einer sehr kleinen und kompakten Bauweise, so daß ein reduzierter Bauraum beim Einsatz eines solchen Ventils, z.B. in einer Brennkraftmaschine benötigt wird. Durch die dünnwandige Ausbildung des Wicklungsträgers wird eine Materialeinsparung erreicht. Neben der Verringerung der Abmessungen des Ventils geht auch eine Reduzierung der Masse einher.

Durch die in den Unteransprüchen aufgeführten Maßnahmen sind vorteilhafte Weiterbildungen und Verbesserungen des im Anspruch 9 angegebenen Ventils möglich.

### Zeichnung

Ausführungsbeispiele der Erfindung sind in der Zeichnung vereinfacht dargestellt und in der nachfolgenden Beschreibung näher erläutert. Es zeigen Figur 1 ein Ventil mit einer erfindungsgemäß hergestellten Magnetspulenanordnung, Figuren 2a und 2b ein erstes Beispiel für das Anbringen einer Magnetspule auf einem inneren Ventilbauteil und Figuren 3a und 3b ein zweites Beispiel für das Anbringen einer Magnetspule auf einem inneren Ventilbauteil.

### Beschreibung der Ausführungsbeispiele

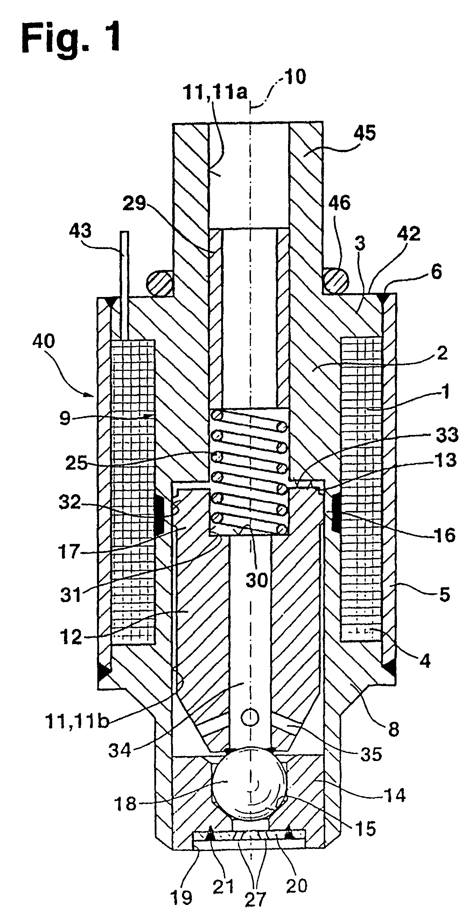

Das in der Figur 1 beispielhaft und teilweise vereinfacht dargestellte, erfindungsgemäße bzw. erfindungsgemäß hergestellte Ventil in der Form eines elektromagnetisch betätigbaren Einspritzventils für Brennstoffeinspritzanlagen von gemischverdichtenden, fremdgezündeten Brennkraftmaschinen hat einen einteiligen, von einer Magnetspule 1 umgebenen, als Innenpol des Magnetkreises und als Brennstoffeinlaß bzw. -durchfluß sowie als Ventilsitzträger dienenden und ein Ventilinnenrohr darstellenden, weitgehend rohrförmigen metallenen Grundkörper 2. Dieses Ventil wird beispielhaft für Magnetventile beschrieben, die in ihren verschiedensten Bauformen erfindungsgemäße Magnetspulen 1 aufweisen können. Der Grundkörper 2 ist mehrfach gestuft und dabei stromaufwärts der Magnetspule 1 in radialer Richtung gestuft ausgeführt, so daß der Grundkörper 2 mit einem oberen Deckelabschnitt 3 die Magnetspule 1 teilweise radial umhüllt und einen besonders kompakten Aufbau des Einspritzventils im Bereich der Magnetspule 1 ermöglicht. Die Magnetspule 1 ist von einem äußeren hülsenförmigen, z. B. ferromagnetischen Ventilmantel 5 als Außenpol umgeben, der die Magnetspule 1 in Umfangsrichtung vollständig umgibt und an seinem oberen Ende fest mit dem Grundkörper 2 an dessen Deckelabschnitt 3 z. B. durch eine Schweißnaht 6 verbunden ist. Zum Schließen des magnetischen Kreises ist der Grundkörper 2 stromabwärts der Magnetspule 1 ebenfalls gestuft ausgeführt, so daß ein Leitabschnitt 8 gebildet ist, der ähnlich dem Deckelabschnitt 3 die Magnetspule 1 axial begrenzt, wobei der Leitabschnitt 8 die Begrenzung der Magnetspule 1 nach unten hin bzw. in stromabwärtiger Richtung darstellt. Der Deckelabschnitt 3, der Leitabschnitt 8 sowie der langgestreckte innere Teil des Grundkörpers 2 begrenzen einen ringförmigen, kammerartigen Spulenraum 9, in dem die eigentliche Wicklung 4 der Magnetspule 1 eingebracht ist. Der Ventilmantel 5 schließt den Spulenraum 9 nach außen hin ab.

Der Grundkörper 2 besitzt eine innere, konzentrisch zu einer Ventillängsachse 10 verlaufende Längsöffnung 11, die in einem stromaufwärtigen Bereich 11a als Brennstoffströmungskanal und in einem stromabwärtigen Bereich 11b noch zusätzlich wenigstens teilweise als Führungsöffnung für eine entlang der Ventillängsachse 10 axial bewegliche Ventilnadel 12 dient. Der Bereich 11b weist einen größeren Durchmesser auf als der Bereich 11a, da im axialen Erstreckungsbereich der Magnetspule 1 ein Stufenabsatz 13 in der Längsöffnung 11 vorgesehen ist. Unmittelbar stromabwärts des Stufenabsatzes 13 besitzt der Grundkörper 2 am Umfang eine dünnwandige magnetische Drosselstelle 16, die von der Magnetspule 1 umgeben ist.

Beispielsweise stromabwärts des Leitabschnitts 8 fungiert der Grundkörper 2 als Ventilsitzträger, da am stromabwärtigen Ende des Bereichs 11b der Längsöffnung 11 ein Ventilsitzkörper 14 eingebracht ist, der eine feste Ventilsitzfläche 15 als Ventilsitz aufweist. Der Ventilsitzkörper 14 ist mit einer beispielsweise mittels eines Lasers erzeugten Schweißnaht fest mit dem Grundkörper 2 verbunden. Ansonsten dient der untere Bereich 11b der Längsöffnung 11 der Aufnahme der Ventilnadel 12, die von einem Anker 17 und einem kugelförmigen Ventilschließkörper 18 gebildet wird. An der stromabwärtigen Stirnseite des Ventilsitzkörpers 14 ist z. B. in einer Vertiefung 19 eine flache Spritzlochscheibe 20 angeordnet, wobei die feste Verbindung von Ventilsitzkörper 14 und Spritzlochscheibe 20 z. B. durch eine umlaufende Schweißnaht 21 realisiert ist. Der als Schließkörperträger dienende Anker 17 ist an seinem stromabwärtigen, der Spritzlochscheibe 20 zugewandten Ende mit dem kugelförmigen Ventilschließkörper 18 beispielsweise durch eine Schweißnaht fest verbunden.

Die Betätigung des Einspritzventils erfolgt in bekannter Weise elektromagnetisch. Zur axialen Bewegung der Ventilnadel 12 und damit zum Öffnen entgegen der Federkraft einer Rückstellfeder 25 bzw. Schließen des Einspritzventils dient der elektromagnetische Kreis mit der Magnetspule 1, dem inneren Grundkörper 2, dem äußeren Ventilmantel 5 und dem Anker 17. Der Anker 17 ist entsprechend auf den Grundkörper 2 ausgerichtet. Die Rückstellfeder 25 erstreckt sich in der Längsöffnung 11 beispielsweise sowohl stromabwärts als auch stromaufwärts des Stufenabsatzes 13, also in beiden Bereichen 11a und 11b.

Der kugelförmige Ventilschließkörper 18 wirkt mit der sich in Strömungsrichtung kegelstumpfförmig verjüngenden Ventilsitzfläche 15 des Ventilsitzkörpers 14 zusammen, die in axialer Richtung stromabwärts einer Führungsöffnung im Ventilsitzkörper 14 ausgebildet ist. Die Spritzlochscheibe 20 besitzt wenigstens eine, beispielsweise vier durch Erodieren oder Stanzen ausgeformte Abspritzöffnungen 27.

Die Einschubtiefe des Ventilsitzkörpers 14 im Einspritzventil ist unter anderem entscheidend für den Hub der Ventilnadel 12. Dabei ist die eine Endstellung der Ventilnadel 12 bei nicht erregter Magnetspule 1 durch die Anlage des Ventilschließkörpers 18 an der Ventilsitzfläche 15 des Ventilsitzkörpers 14 festgelegt, während sich die andere Endstellung der Ventilnadel 12 bei erregter Magnetspule 1 durch die Anlage des Ankers 17 an dem Stufenabsatz 13 des Grundkörpers 2 ergibt. Die Hubeinstellung erfolgt z.B. durch ein axiales Verschieben des Ventilsitzkörpers 14, der entsprechend der gewünschten Position nachfolgend fest mit dem Grundkörper 2 verbunden wird.

In den oberen Bereich 11a der Längsöffnung 11 ist außer der Rückstellfeder 25 eine Einstellhülse 29 eingeschoben. Die Einstellhülse 29 dient zur Einstellung der Federvorspannung der an der Einstellhülse 29 anliegenden Rückstellfeder 25, die sich mit ihrer gegenüberliegenden Seite an einem Bodenbereich 30 einer inneren Vertiefung 31 im Anken 17 abstützt, wobei auch eine Einstellung der dynamischen Abspritzmenge mit der Einstellhülse 29 erfolgt.

Der Anker 17 weist z.B. im axialen Erstreckungsbereich der magnetischen Drosselstelle 16 am äußeren Umfang eine ringförmige obere Führungsfläche 32 auf, die der Führung der axial beweglichen Ventilnadel 12 in der Längsöffnung 11 dient. Der Anker 17 hat eine obere, dem Stufenabsatz 13 zugewandte Anschlagfläche 33, die mit einer Verschleißschutzschicht versehen ist, z.B. verchromt ist. Vom Bodenbereich 30 der Vertiefung 31 ausgehend ist in dem Anker 17 eine Durchgangsöffnung 34 ausgeformt, die sich bis zum Ventilschließkörper 18 erstreckt. Nahe des Ventilschließkörpers 18 zweigen mehrere Abzweigöffnungen 35 von der Durchgangsöffnung 34 ab, die bis zur äußeren Begrenzung des Ankers 17 verlaufen. Diese Ausbildung des Ankers 17 ermöglicht es, daß der der Ventilsitzfläche 15 zuzuführende Brennstoff durch die Vertiefung 31 und die Durchgangsöffnung 34 sowie die Abzweigöffnungen 35 ungehindert strömen kann. Die Abzweigöffnungen 35 sind in ihrer Form frei gestaltbar (z.B. mit kreisförmigen, elliptischen oder mehreckigen Querschnitten) und können radial oder schräg verlaufen.

Ein Ventil in oben beschriebener Bauweise zeichnet sich durch seinen besonders kompakten Aufbau aus, so daß ein sehr kleines, handliches Bauelement entsteht, dessen Ventilmantel 5 beispielsweise einen Außendurchmesser von nur ca. 11 bis 14 mm aufweist. Die bisher beschriebenen Bauteile bilden eine vormontierte eigenständige Baugruppe, die als Funktionsteil 40 bezeichnet werden kann. Das fertig eingestellte und montierte Funktionsteil 40 weist z. B. eine obere Stirnfläche 42, hier des Deckelabschnitts 3, auf, über die beispielsweise zwei Kontaktstifte 43 herausragen. Über die elektrischen Kontaktstifte 43, die als elektrische Verbindungselemente dienen, erfolgt die elektrische Kontaktierung der Wicklung 4 der Magnetspule 1 und damit deren Erregung.

Mit einem solchen Funktionsteil 40 ist ein nicht dargestelltes Anschlußteil verbindbar, das sich vor allen Dingen dadurch auszeichnet, daß es den elektrischen und den hydraulischen Anschluß des gesamten Einspritzventils umfaßt. Eine hydraulische Verbindung von dem nicht dargestellten Anschlußteil und dem Funktionsteil 40 wird beim vollständig montierten Einspritzventil dadurch erreicht, daß Strömungsbohrungen beider Baugruppen so zueinander gebracht werden, daß ein ungehindertes Durchströmen des Brennstoffs gewährleistet ist. Dabei liegt dann z. B. die Stirnfläche 42 des Funktionsteils 40 unmittelbar an einer unteren Stirnfläche des Anschlußteils an und ist mit diesem fest verbunden. Bei der Montage des Anschlußteils auf dem Funktionsteil 40 kann ein über die Stirnfläche 42 und damit über den Deckelabschnitt 3 überstehender Grundkörperstutzen 45 des Grundkörpers 2 zur Erhöhung der Verbindungsstabilität in eine Strömungsbohrung des Anschlußteils hineinragen. Im Verbindungsbereich ist zur sicheren Abdichtung z. B. ein Dichtring 46 vorgesehen, der auf der Stirnfläche 42 des Deckelabschnitts 3 aufliegend den Grundkörperstutzen 45 umgibt. Die als elektrische Verbindungselemente dienenden Kontaktstifte 43 gehen im vollständig montierten Ventil eine sichere elektrische Verbindung mit korrespondierenden elektrischen Verbindungselementen des Anschlußteils ein.

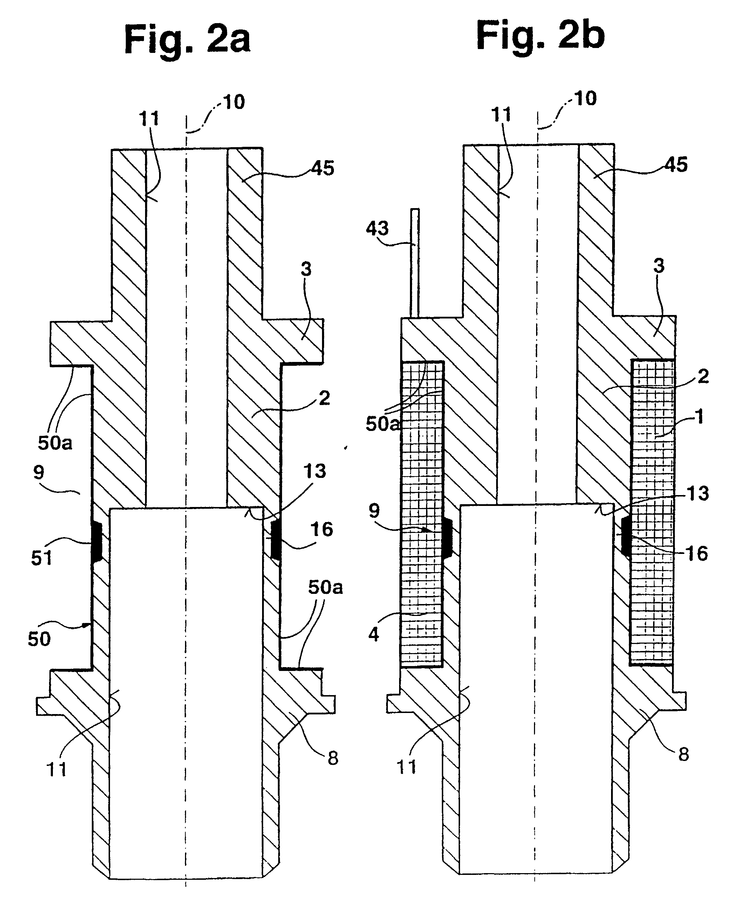

In den nachfolgenden Figuren sind Grundkörper 2 vollständig bzw. teilweise im Bereich der Magnetspule 1 dargestellt, um die erfindungsgemäße Ausbildung der Magnetspule 1 zu verdeutlichen. Dabei zeigen die Figuren 2a und 2b den bereits aus Figur 1 bekannten Grundkörper 2, und zwar einerseits vor dem Einbringen und andererseits nach dem Einbringen der Wicklung 4 der Magnetspule 1. Die Wicklung 4 wird bei dem erfindungsgemäßen Ausbilden der Magnetspule 1 nicht wie bei bekannten Ventilen auf einem Spulenkörper vorgenommen, der zusammen mit der Bewicklung als vorgefertigte Baugruppe montiert wird, sondern auf einem bereits am Grundkörper 2 bzw. am Innenpol oder am Ventilinnenrohr vorgesehenen Wicklungsträger 50, der z.B. als dünne Schicht 50a adhäsiv den Spulenraum 9 entlang der Wandung des Grundkörpers 2 auskleidet. Die dünne Schicht 50a haftet adhäsiv an der Oberfläche des Grundkörpers 2 und füllt dabei beispielsweise auch eine zur Bildung der magnetischen Drosselstelle 16 benötigte Ringnut 51 des Spulenraums 9 vollständig aus. Die dünne Schicht 50a aus Kunststoff dient der elektrischen Isolierung der später in den Spulenraum 9 einzubringenden Wicklung 4 gegenüber dem Grundkörper 2. Das Aufbringen der Schicht 50a im Spulenraum 9 erfolgt beispielsweise durch Aufdampfen, Aufspritzen, Pulverbeschichten, Lackieren oder andere Beschichtungsverfahren.

Wie Figur 2b zeigt, wird erst nach dem Anbringen des Wicklungsträgers 50 am Grundkörper 2 die Wicklung 4 der Magnetspule 1 eingebracht. Dazu wird der beschichtete Spulenraum 9 mit einem Spulendraht bewickelt, wobei der Deckelabschnitt 3 und der Leitabschnitt 8, die ebenfalls mit der Schicht 50a versehen sind, in vorteilhafter Weise als Wickelbegrenzungen dienen, die ein axiales Aufweiten oder Abdriften der Wicklung 4 verhindern.

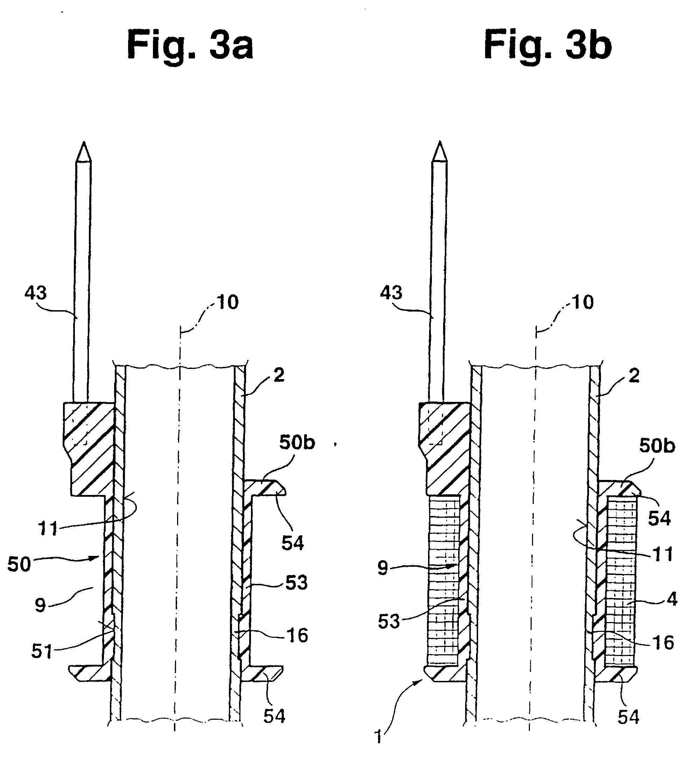

In den Figuren 3a und 3b ist ein zweites Ausführungsbeispiel dargestellt, bei dem ebenfalls ein isolierender Wicklungsträger 50b adhäsiv haftend auf einem Grundkörper 2 des Ventils aufgebracht wird, bevor die eigentliche Wicklung 4 der Magnetspule 1 eingebracht wird. Der gestuft ausgeführte Wicklungsträger 50b aus Kunststoff wird direkt auf den z.B. dünnwandigen, rohrförmigen Grundkörper 2 (Ventilinnenrohr, Innenpol) des Ventils aufgespritzt. Der Wicklungsträger 50b besteht dabei aus einem rohrförmigen Trägerabschnitt 53, der sich unmittelbar an die Wandung des Grundkörpers 2 anschmiegt. Als axiale Begrenzungen für die spätere Wicklung 4 dienen zwei radial verlaufende Kragenabschnitte 54, die sich vom Trägerabschnitt 53 aus erstrecken und im gleichen Kunststoffspritzgußprozeß wie der Trägerabschnitt 53 ausgeformt werden. Die magnetische Drosselstelle 16 wird ebenfalls mitumspritzt, da die Ringnut 51 am Grundkörper 2 auch mit Kunststoff ausgefüllt wird. Das Umspritzen der dünnwandigen Drosselstelle 16 erhöht die mechanische Festigkeit in diesem sensibleren Bereich. Wie Figur 3a zeigt, können die Kontaktstifte 43 zur elektrischen Kontaktierung der Magnetspule 1 unmittelbar mit in den Wicklungsträger 50b eingespritzt werden. Eine andere, nicht dargestellte Lösung sieht vor, die Kontaktstifte 43 erst nachträglich mit der Wicklung 4 anzubringen. Mit dem Einbringen der Wicklung 4 muß selbstverständlich eine Kontaktierung der Enden des Spulendrahtes mit den Kontaktstiften 43 vorgenommen werden.

Gemäß Figur 3b wird die Wicklung 4 der Magnetspule 1 erst wiederum nach der Fixierung des Wicklungsträgers 50b auf dem Grundkörper 2 in den Wicklungsträger 50b eingebracht. Es liegt also keine Baugruppe bestehend aus Spulenkörper und Wicklung vor, die komplett auf dem Grundkörper 2 montiert wird; vielmehr wird die Wicklung 4 nachträglich vorgesehen. In vorteilhafter Weise wird durch das direkte Aufspritzen des Wicklungsträgers 50b oder das Aufbringen der Schicht 50a Einbauraum eingespart, da die radialen Wandungsdicken des Wicklungsträgers 50b reduziert bzw. die Schichten 50a sehr dünn ausgebildet werden können. Ein Aufbringen des Wicklungsträgers 50b auf dem Grundkörper 2 unter Formschluß ist ebenfalls denkbar.

## Patentansprüche

1. Verfahren zur Herstellung einer Magnetspule für ein Ventil mit den Verfahrensschritten
a) Ausbilden eines inneren metallenen Grundkörpers (2) des Ventils mit einer inneren Längsöffnung (11),
b) Aufbringen eines elektrisch isolierenden Wicklungsträgers (50) an der äußeren Wandung des Grundkörpers (2),
c) Einbringen einer Wicklung (4) der Magnetspule (1) in den Wicklungsträger (50),
**dadurch gekennzeichnet, daß** der Grundkörper (2) derart ausgeformt wird, daß an ihm ein ringförmiger Spulenraum (9) zur Aufnahme der Wicklung (4) gebildet ist, an dessen Wandungen der Wicklungsträger (50) als dünne, adhäsiv haftende Schicht (50a) aufgebracht wird.

2. Verfahren nach Anspruch 1, **dadurch gekennzeichnet, daß** das Aufbringen der Schicht (50a) durch Aufdampfen, Pulverbeschichten, Lackieren oder Aufspritzen eines elektrisch isolierenden Materials erfolgt.

3. Verfahren nach Anspruch 2, **dadurch gekennzeichnet, daß** als Beschichtungsmaterial ein Kunststoff verwendet wird.

4. Verfahren nach einem der Ansprüche 1 bis 3, **dadurch gekennzeichnet, daß** eine zur Bildung einer magnetischen Drosselstelle (16) des Grundkörpers (2) vom Spulenraum (9) aus vorgesehene Ringnut (51) ebenfalls mit der Schicht (50a) ausgefüllt wird.

5. Ventil mit einer Magnetspule (1), die einen inneren metallenen Grundkörper (2), der eine innere Längsöffnung (11) aufweist, umgibt und einen elektrisch isolierenden Wicklungsträger (50) sowie eine Wicklung (4) hat, wobei die Wicklung (4) auf den bereits auf dem Grundkörper (2) aufgebrachten Wicklungsträger (50) gewickelt ist, **dadurch gekennzeichnet, daß** der Grundkörper (2) derart ausgeformt ist, daß an ihm ein ringförmiger Spulenraum (9) gebildet ist, in dem die Wicklung (4) der Magnetspule (1) aufgenommen ist, wobei an den Wandungen des Spulenraums (9) der Wicklungsträger (50) als dünne, adhäsiv haftende Schicht (50a) aufgebracht ist.

6. Ventil nach Anspruch 5, **dadurch gekennzeichnet, daß** die Schicht (50a) durch Aufdampfen, Pulverbeschichten, Lackieren oder Aufspritzen eines elektrisch isolierenden Materials aufbringbar ist.

7. Ventil nach Anspruch 6, **dadurch gekennzeichnet, daß** das Beschichtungsmaterial ein Kunststoff ist.

8. Ventil nach einem der Ansprüche 5 bis 7, **dadurch gekennzeichnet, daß** eine zur Bildung einer magnetischen Drosselstelle (16) des Grundkörpers (2) vom Spulenraum (9) aus vorgesehene Ringnut (51) ebenfalls mit der Schicht (50a) ausgefüllt ist.

## Claims

1. Method for producing a magnetic coil for a valve with the method steps of
a) forming an inner metallic basic body (2) of the valve with an inner longitudinal opening (11),
b) applying an electrically insulating winding carrier (50) to the outer wall of the basic body (2),
c) introducing a winding (4) of the magnetic coil (1) into the winding carrier (50),
**characterized in that** the basic body (2) is shaped in such a way that formed on it is an annular coil space (9) for accommodating the winding (4), on the walls of which the winding carrier (50) is applied as a thin, adhesively attaching layer (50a).

2. Method according to Claim 1, **characterized in that** the application of the layer (50a) is performed by vapour depositing, powder coating, painting or spraying on an electrically insulating material.

3. Method according to Claim 2, **characterized in that** a plastic is used as the coating material.

4. Method according to one of Claims 1 to 3, **characterized in that** an annular groove (51) intended for forming a magnetic constriction (16) of the basic body (2) from the coil space (9) is likewise filled with the layer (50a).

5. Valve with a magnetic coil (1), which surrounds an inner metallic basic body (2), which has an inner longitudinal opening (11), and has an electrically insulating winding carrier (50) and a winding (4), the winding (4) being wound on the winding carrier (50) already applied to the basic body (2), **characterized in that** the basic body (2) is shaped in such a way that formed on it is an annular coil space (9) in which the winding (4) of the magnetic coil (1) is accommodated, the winding carrier (50) being applied on the walls of the coil space (9) as a thin, adhesively attaching layer (50a).

6. Valve according to Claim 5, **characterized in that** the layer (50a) can be applied by vapour depositing, powder coating, painting or spraying on an electrically insulating material.

7. Valve according to Claim 6, **characterized in that** the coating material is a plastic.

8. Valve according to one of Claims 5 to 7, **characterized in that** an annular groove (51) intended for forming a magnetic constriction (16) of the basic body (2) from the coil space (9) is likewise filled with the layer (50a).

## Revendications

1. Procédé de production d'une bobine magnétique pour une soupape comprenant les phases de procédé suivantes :
a) former un corps de base intérieur métallique (2) de la soupape avec une ouverture longitudinale intérieure (11),
b) mettre un support d'enroulement (50) isolant de l'électricité en place sur la paroi extérieure du corps de base (2),
c) mettre un enroulement (4) de la bobine magnétique (1) en place dans le support d'enroulement (50).
**caractérisé en ce que**
le corps de base (2) est conformé de manière qu'un logement de bobine annulaire (9) soit formé sur ce corps pour recevoir l'enroulement (4). le support d'enroulement (50) étant mis en place contre les parois de ce logement sous la forme d'une couche mince (50a) fixée par une liaison adhésive.

2. Procédé selon la revendication 1,
**caractérisé en ce que**
la mise en place de la couche (50a) s'effectue par évaporation, recouvrement de poudre, vernissage ou projection d'une matière isolante de l'électricité.

3. Procédé selon la revendication 2,
**caractérisé en ce que**
l'on utilise une matière plastique comme matière de revêtement.

4. Procédé selon une des revenidications 1 à 3,
**caractérisé en ce que**
une gorge annulaire (51), prévue à partir du logement de bobine (9) pour former une zone d'étranglement magnétique (16) du corps de base (2), est elle aussi comblée avec la couche (50a).

5. Soupape équipée d'une bobine magnétique (1) qui entoure un corps de base métallique intérieur (2) qui présente une ouverture longitudinale intérieure (11), et un support d'enroulement isolant de l'électricité (50). ainsi qu'un enroulement (4), l'enroulement (4) étant enroulé sur le support d'enroulement (50) déjà mis en place sur le corps de base (2),
**caractérisée en ce que**
le corps de base (2) est conflguré de manière que. sur ce corps de base, soit formé un logement de bobine annulaire (9) dans lequel l'enroulement (4) de la bobine magnétique (1) est logé, le support d'enroulement (50) étant appliqué contre les parois du logement dc bobine (9) sous la forme d'une couche mince (50a) fixée par une liaison adhésive.

6. Soupape selon la revendication 5.
**caractérisée en ce que**
la couche (50a) peut être mise en place, par évaporation, recouvrement de poudre, vernissage, ou projection d'une matière isolante de l'électricité.

7. Soupape selon la revendication 6,
**caractérisée en ce que**
la matière de revêtement est une matière plastique.

8. Soupape selon une des revendications 5 à 7,
**caractérisée en ce que**
une gorge annulaire (51) prévue à partir du logement de bobine (9) pour former une zone d'étranglement magnétique (16) du corps de base (2) est elle aussi comblée au moyen de la couche (50a).
